# EUROPEAN PATENT APPLICATION

(11) **EP 1 559 667 A1**
(43) Date of publication of application: **03.08.2005**
(21) Application number: 04002081.0
(22) Date of filing: 30.01.2004
(51) Int. Cl.: B65G 21/14, B65G 43/00

(54) **Telescopic belt conveyor**

(71) Applicant: Caljan Rite-Hite ApS, 8361 Hasselager (DK)
(72) Inventor: Petersen, Erik Steen, 8270 Hojbjerg (DK)
(74) Representative: Niederkofler, Oswald A., Dipl.-Phys.

(57) **Abstract**

A telescopic belt conveyor (2) comprising a basic conveyor section (A), a number of intermediate telescopic conveyor sections (B, C), and an outermost telescopic conveyor section (D), said conveyor sections (A-D) are mutually connected by means of a number of drive chains (20) which are lead over sprocket wheels (10, 12, 14, 16, 18) for execution telescoping movement in and out of said telescopic conveyor sections (B, C, D) by means of a common drive unit, and an endless conveyor belt (4) constitution an active conveying track of said conveyor sections (A-D), said conveyor sections are drive-connected with a common drive system, where said electric control system comprises an integrated security system, and that there at outermost ends of said conveyor sections are provided anti-squeeze means (42, 48) with an electric switch (46, 54) being a part of said security system. In a simple manner and by means of simple provisions it is hereby possible to overcome said disadvantageous including said personal damages mainly concerning hands and fingers. Furthermore the telescopic belt conveyor may furthermore comprise electric brake means, which are adapted to engage between the respective conveyor sections, and which being controlled in a such manner, that said brake means by power failure, broken chains and by activating security switches automatic brakes any telescopic movement of the respective conveyor sections.

## Description

### Technical Field

The present invention relates to a telescopic belt conveyor of the type as disclosed in the preamble to claim 1.

### Background Art

Telescopic belt conveyors of the introductory mentioned type are known and used in many connections and in many embodiments. US-A-4 643 299 discloses a telescopic belt conveyor of the mentioned type and comprises a first basic conveyor section within a longitudinal housing, which at one end is provided with an opening , through which a number, by way of example two, three or more, of telescopic conveyor sections are arranged within each other. These telescopic conveyor sections may be telescopically moved in and out in relation to each other, as the respective conveyor sections are mutually connected by means of suitable system of drive members (illustratively chains) in relation to each other and in relation to said basic conveyor section, which is provided with a common drive system for controlling the telescopic movement.

However, known telescopic belt conveyors are encumbered with some disadvantages which may course serious working accidents. There exists a risk that personnel, especially during the telescopic movement of the respective telescopic conveyor sections, may get hands or fingers squeezed between the respective conveyor sections. Another potential risk is that the drive chains of the intermediate conveyor sections, when the undersides thereof are exposed during outwardly and inwardly movements, may cause damages especially of hands and fingers.

On this background it is the purpose of the invention to provide a new and improved telescopic belt conveyor of the introductory mentioned type and by means of which the said disadvantages may be avoided in a simple manner and where the risks for damaging especially hands and fingers are avoided.

### Disclosure of Invention

According to the invention the telescopic belt conveyor is characterized in, that the electric control system of the conveyor comprises an integrated security system, and that there at outermost ends of said conveyor sections are provided anti-squeeze means with an electric switch being a part of said security system. In a simple manner and by means of simple provisions it is hereby possible to overcome said disadvantages including said personal damages mainly concerning hands and fingers.

Appropriately, said telescopic belt conveyor according to the invention may be provided such that said anti-squeeze means comprises a pivotally wall or shield part cooperating with said electric switch belonging to said security system.

According to a preferred embodiment the telescopic belt conveyor according to invention is provided such that said anti-squeeze means at the outermost end of said basic conveyor section and said intermediate conveyor section are constituted of an upper pivotally arranged traverse plate part being adapted to swing inwards against the effect from one or more compression springs at a compression impact, said plate part interacts with said electrical switch belonging to said security system.

If a person engages the underside of the conveyor section with hands or fingers during the telescopic movement between the conveyor section, when these are moved inwardly, the said upper wall part at the outermost end of said intermediate or said outermost conveyor section will be forced to be swung inwardly and engage the electric switch, so that the telescopic movement of at least the relevant conveyor section is stopped and damages of the hands and fingers may be prevented.

By swinging back the said upper wall part to vertical position the electric switch belonging to said common security system will again be closed, so that the telescopic movement of the telescopic conveyor section may take place again. The aforementioned compression springs may assist this movement back to the vertical position

According to another embodiment the telescopic belt conveyor according to the invention is provided such that said anti-squeeze means at the outermost end of said outermost conveyor section are constituted of a traverse semi-circular shield part, which is adapted to be able to swing upward or inward against the effect from one or more compression springs by an upwardly or inwardly directed compression impact, said shield part interacts with said electrical switch belonging to said security system.

As a result of the semi-circular shield part being pivotal about an upper transverse axis, forces applied both backwardly as well as upwardly on the shield part cause it to be swung inwardly/upwardly and to engage the electric switch belonging to the common security system, which switch automatically will switch off any telescopic movement of the telescopic conveyor sections. If the outermost conveyor section furthermore comprises a separate elevation up or down function also the operation thereof may be prevented or stopped by engaging said electric switch by pivoting of said shield part.

In order to secure the entire width of the end part of the outermost telescopic conveyor section said semi-circular shield part is provided with semi-circular end walls and with a width which preferably is a little bit wider than that of an end part of said outermost conveyor section.

In order to - at the same time - better be able to serve the operator of the telescopic belt conveyor according to the invention, said shield part may comprise a built-in control box, which is accessible for operation of the functions of the telescopic belt conveyor mainly from the front of said shield part.

Furthermore it may be of particular advantage, that said shield part in a forward curved surface being provided with slots forming a relatively open grid or a netting, and that a light source is mounted inside said shield part, so that a working zone, possibly in the dark loading area of a truck, may be lighted.

According to a still further and advantageous embodiment of the telescopic belt conveyor according to the invention it may further be provided such that said security system comprises electric brake means, which are adapted to engage between the respective conveyor sections.

The brake means are controlled in a such manner, that automatically brake any telescopic movement of the respective conveyor sections, whether due to power failure, broken chains or by activating security switches.

To achieve this finction, the brake means may be biased into a braking configuration, such as by springs, and powered or actuated into a release position. In this way, any action which would interrupt the power necessary to maintain the brake means in the release poison would cause the brake means to engage and stop telescopic movement.

### Brief Description of Drawings

The invention is described in more details with reference to the accompanying drawings, in which:
- Fig. 1: shows a schematic plane side view of the course of said endless conveyor belt in an embodiment for a telescopic belt conveyor according to the invention,
- Fig. 2: shows a corresponding side view of an outer part of the telescopic belt conveyor shown in Fig. 1,
- Fig. 3: shows a plane schematic side view of an embodiment for a telescopic belt conveyor according to the invention - shown with the telescopic sections in a moved together situation,
- Fig. 4: shows a corresponding plane view of the course of drive chains between the respective telescopic conveyor sections - shown in a partly moved out position in relation to a basic conveyor section,
- Fig. 5: shows a side view of an outermost part of the telescopic belt conveyor shown in Fig. 4,
- Fig. 6: shows a simplified side sectional view through an outermost part of the belt conveyor cf. Fig. 3,
- Fig. 7: shows an enlarged circular sectional view B cf. Fig. 6,
- Fig. 8: shows a simplified transverse sectional view through an outermost part of the telescopic belt conveyor cf. Fig. 3,
- Fig. 9: shows an enlarged circular sectional view C cf. Fig. 8,
- Fig. 10: shows a schematic detail view of a pivot switch at the front end of said intermediate conveyor sections and said basic conveyor section in a telescopic belt conveyor according to the invention,
- Fig. 11: shows a schematic detail view of said anti-squeezing means at the outermost conveyor section of a telescopic belt conveyor according to the invention,
- Fig. 12: shows a plane schematic side view of a preferred embodiment for a telescopic belt conveyor according to the invention - shown with the telescopic sections in a moved together situation,
- Fig. 13: shows a corresponding plane view of the course of drive chains between the respective telescopic conveyor sections - shown in a partly moved out position in relation to a basic conveyor section, and
- Fig. 14: shows a transverse sectional view through said preferred embodiment for a telescopic belt conveyor according to the invention.

### Detailed Description of Invention

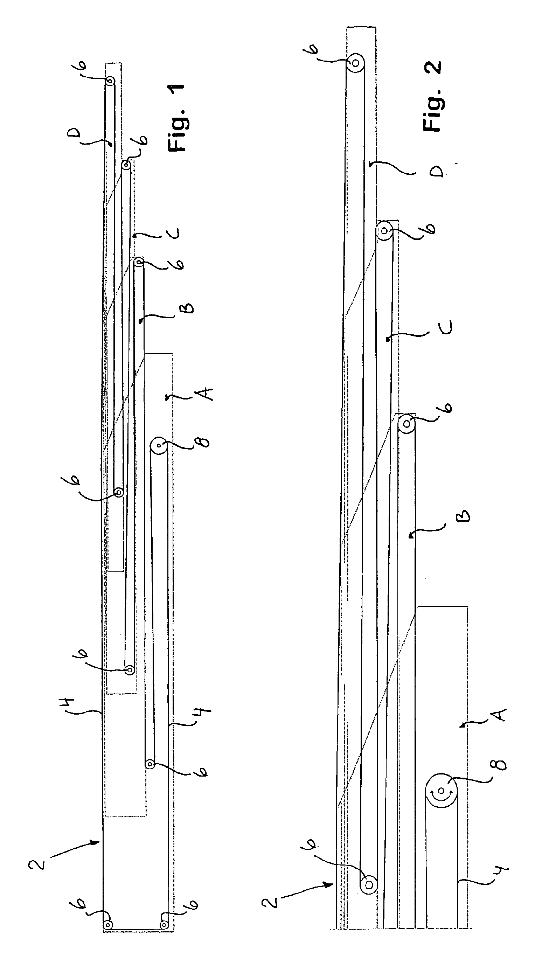

The telescopic belt conveyor 2 comprises four sections, namely a basic section A, two intermediate sections B and C and an outermost section D. The sections B, C and D may be moved in and out in a telescopic manner in relation to each other and in relation to the basic section A. The belt conveyor 2 comprises an endless conveyor belt 4, which cf. Figs 1 and 2 is lead around a number of stationary reversing rollers 6 in the respective sections A-D, and which is driven by a common, reversible drive roller 8, which is positioned in section A, and which is driven by a motor, illustratively an electric driving motor, although hydraulic or other motor types could be used.

The telescopic movement of the sections B-C may be carried out in a varity of ways. In this embodiment, it is carried out by means of elongated drive members in the form of chains 10, 12, 14, 16 and 18, which are disposed at opposite long sides of the belt conveyor 2. The drive chains 10, 12, 14, 16 and 18 run between the respective sections A-D around stationary sprocket wheels, as opposite ends of each of the drive chains 10, 12, 14, 16 and 18 are anchored to two sections. The drive chains 10 are furthermore led around driving sprocket wheels 22, which are placed in the front end of section A, and which are driven by means of a not shown reversible electric driving motor. End parts of the drive chains 10 are at 24 anchored to a rearmost end part of section B, from where the drive chains 10 are led around stationary sprocket wheels 20 in rearmost end of the basic section A and forward around stationary sprocket wheels 21, around the drive sprocket wheels 22 and back again around stationary sprocket wheels 23 to anchor points 26 at the underside of section B in some distance in front of the rearmost end of section B.

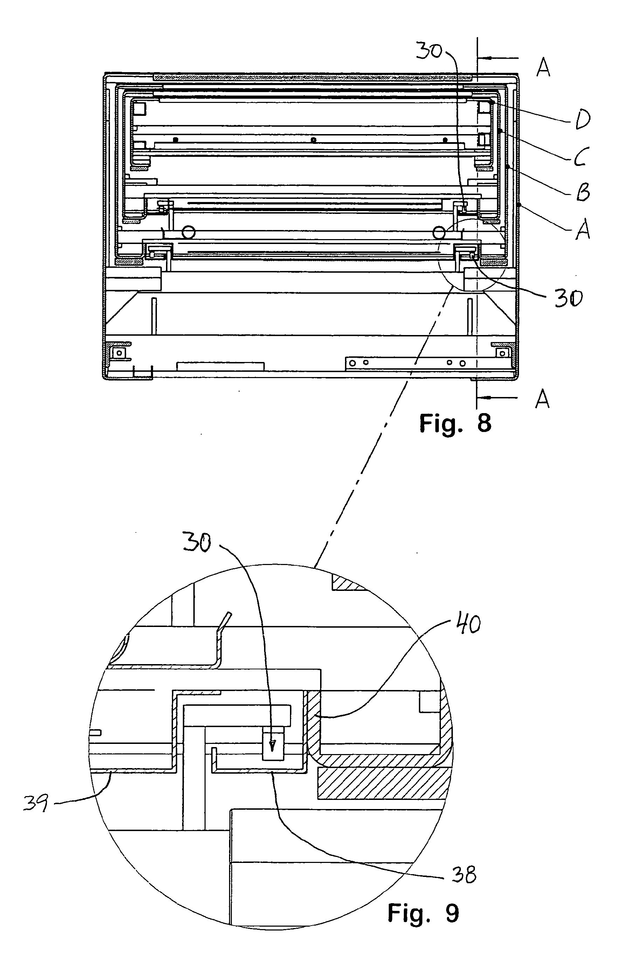

Similarly, end parts of the drive chains 12 are rearmost in section C anchored at 28, from where the drive chains 12 are led around stationary sprocket wheels 20 placed in the rearmost end of section B and forward to the rear sides of cranking chain mountings 30 (Fig. 7) in the front end of basic section A. End parts of the drive chains 14 are anchored to the front side of the same chain mounting 30 in the front end of basic section A, from where the drive chains 14 are led forward and around stationary sprocket wheels in the front end of section B and again backwards to anchor points 32 at the underside of section C in some distance in front of the anchor points 28.

In a similar manner, end parts of the drive chains 16 are anchored at 34 rearmost in section D, from where the drive chains 16 are led backwards around stationary sprocket wheels placed rearmost in section C and again forward to the rear sides of cranking chains mountings 30 in the front of section B. End parts of the drive chains 18 are anchored to the front sides of the same chain mounting 30 in the front of section B, from where the drive chains 18 are led forward and around stationary sprocket wheels 20 in the front end of section C and again led backwards to anchor points 36 at the underside of section D in some distance in front of the anchor points 34.

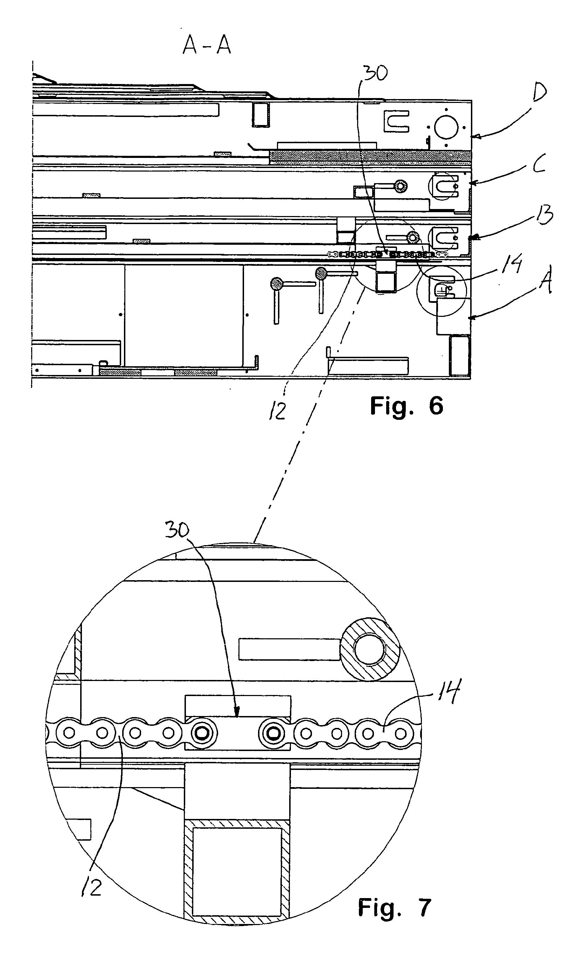

Figs. 6-9 show the position and more details about said cranking chain mountings 30, which are placed in the front ends of sections A and B, and which are used for the anchoring of end parts of the drive chains 12, 14, 16 and 18. Furthermore Figs. 8 and 9 show longitudinal coverings 38 for the lower course of the drive chains 14 and 18 by the intermediate sections B and C. These longitudinal coverings 38 are at both sides of the belt conveyor 2 suspended at the inside of longitudinal carrying girders 40 of the intermediate sections B and C.

The longitudinal coverings are made possible by the configuration of cranking mountings 30, which serve to raise the lower runs of chains 12, 14, 16 and 18 above their conventional positions without chain mountings 30. Absent this raising of the lower runs of the chains, the longitudinal coverings are not possible, as they would be in an interfering position between sections such as would prevent proper telescopic operation.

Preferably, the entire underside of each the telescopic conveyor sections is closed by the combination of the chain guard 38 and the belt guard 39 - shown to the left of fig. 9. The raised anchor points 30 for the chains allows the chain guard 38 to be positioned as it is, and fills the side gap that used to exist where the belt guard 39 ended and the unguarded chains ran. The combination of the chain guard 38, the bracket for holding mountings 30 and the belt guard 39 present what is in effect a closed bottom, although not the complete closed bottom of the preferred embodiment.

In general it applies that the respective conveyor sections B, C and D in relations to each other and in relation to the basic conveyor section - as per see known - are supported and guided in the transverse direction by means of stationary rollers provided with external guiding flanges, which cooperate with longitudinal carrying girders.

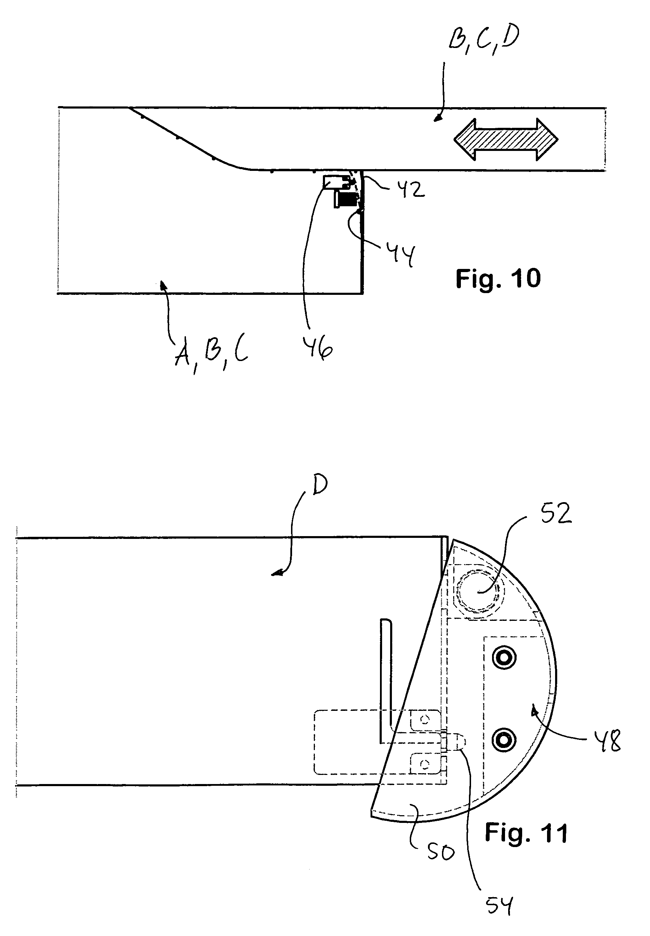

Fig. 10 shows a schematic detail view of a front end part of the sections A, B or C, where an anti-squeeze means in the form of an upper transverse plate part 42 is provided with a lower hinge 44, so that the plate part 42 is able to be swung inwardly, whereby the plate part 42 will engage an electric switch 46, which belongs to the security system of the belt conveyor 2, so that the telescopic movement of the sections B, C and D at once is interrupted. The plate part 42 is spring activated to return to its normal vertical position, when the item, finger or hand, which having caused the emergency stop is again moved and the electric switch has again been closed.

Fig. 11 shows a schematic detail view of another embodiment of anti-squeezing means disposed at the outermost end of section D in the form of a transverse shield 48 having semi-circular cross section, with also semi-circular end walls 50, as the length of the shield 48 is a little longer than that of the end of the conveyor section D. The shield 48 is a unit pivotally suspended around an upper transverse axis 52. so that the shield 48 against the function of a number of compression springs may be swung inwards/upwards, whereby the shield 48 will engage a security switch 54, which belongs to the security system of the belt conveyor 2, and which thereby instantly stops any telescopic movement and/or a possible tipping movement, if the belt conveyor 2 also has a vertical tipping function of one or more conveyor sections.

Furthermore, it would be possible to arrange the shield 48 in such a manner that it could be displaceable in the transverse direction in relation to the outer end of the conveyor section D, and that a such transverse displacement of the shield 48 in relation to the outer end part of section D would activate an electric security switch and cause interruption of any transverse swinging movement of the outer end of conveyor section D.

Due to its shape and suspension the shield 48 furthermore may acts as security switch for downward directed squeeze forces, so that a possible downward tipping movement of the outermost section instantly may be interrupted, if a person by way of example get a foot squeezed under the front end of the outermost section D.

The arched front side of the shield 48 may advantageously be provided a grating by way of example provided by means of a number of slots, so that a light source positioned inside the shield 48 may be able to light the area outside the front end of the belt conveyor 2. This may in particular be advantageous, if the belt conveyor is lead into the truck body for the loading or unloading of goods or parcels.

In the arched front side or in a plane side wall of the shield 48 may possibly be built-in a control box with push-button switches for operation of said light source and the respective drive motors of the telescopic belt conveyor for start/stop of the conveying belt respectively the telescopic movement of the conveyor sections.

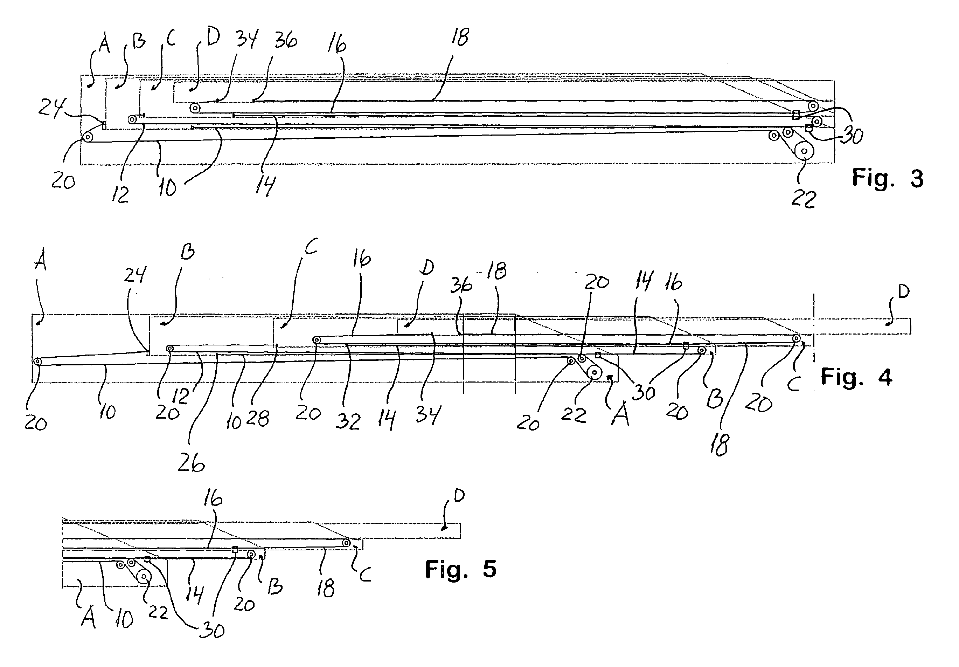

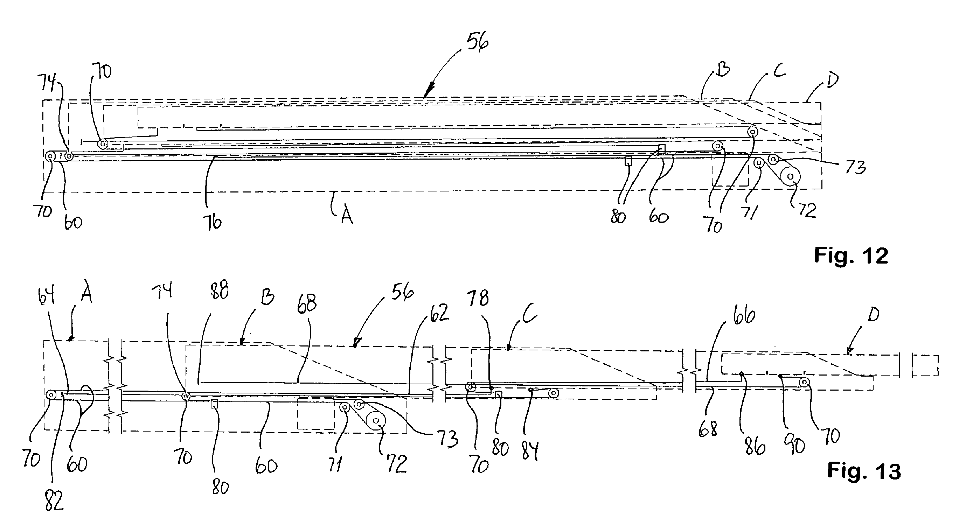

By a preferred embodiment for a telescopic belt conveyor 56 the course of the endless conveyor belt 4 in principle is quite the same as shown in Figs. 1 and 2, while the course of the respective drive chains as shown in Figs. 12-14 is indeed different than that of the course of the drive chains 10, 12, 14, 16 and 18 by the telescopic belt conveyor 2 as described above with reference to Figs. 3-9.

The telescopic belt conveyor 56 comprises four sections, namely a basic section A, two intermediate sections B and C and an outermost section D. The sections B, C and D may be moved in and out in a telescopic manner in relation to each other and in relation to the basic section A. The belt conveyor 56 comprises an endless conveyor belt 4, which cf. Figs 1 and 2 is lead around a number of stationary reversing rollers 6 in the respective sections A-D, and which is driven by a common, reversible drive roller 8, which is positioned in section A, and which is driven by a motor such as an electric or hydraulic driving motor.

The telescopic movement of the sections B-C is carried out by means of drive chains 60, 62, 64, 66 and 68, which are disposed at opposite longitudinal sides of the belt conveyor 56 runs between the respective sections A-D around sprocket wheels being mounted stationary in the respective sections A-D, as opposite ends of each of the drive chains 60, 62, 64, 66 and 68 are anchored to two sections. The drive chains 60 are furthermore led around driving sprocket wheels 72, which are placed in the front end of section A, and which are driven by means of a not shown reversible electric or other driving motor. End parts of the drive chains 60 are at 74 anchored to a rearmost end part of section B, from where the drive chains 60 are led around stationary sprocket wheels 70 in rearmost end of the basic section A and forward around stationary sprocket wheels 71, around the drive sprocket wheels 72 and back again around stationary sprocket wheels 73 to anchor points 76 at the underside of section B in some distance in front of the rearmost end of section B.

End parts of the drive chains 62 are rearmost in section C anchored at 78, from where the drive chains 62 are led around sprocket wheels 70 mounted on the rearmost wall section B and forward to chain mountings 80 in the front end of basic section A. End parts of the drive chains 64 are anchored near the rearmost end of section A at 82, from where the drive chains 64 are led forward and around stationary sprocket wheels 70 in the front end of section B and again backwards to anchor points 84 at the underside of section C in some distance in front of the anchor points 78.

End parts of the drive chains 66 are anchored at 86 rearmost in section D, from where the drive chains 66 are led backwards around sprocket wheels mounted 70 on the rearmost wall of section C and again forward to chains mountings 80 in the front of section B. End parts of the drive chains 68 are near the rearmost end of section B at 88, from where the drive chains 68 are led forward and around stationary sprocket wheels 70 in the front end of section C and again led backwards to anchor points 90 at the underside of section D in some distance in front of the anchor points 86.

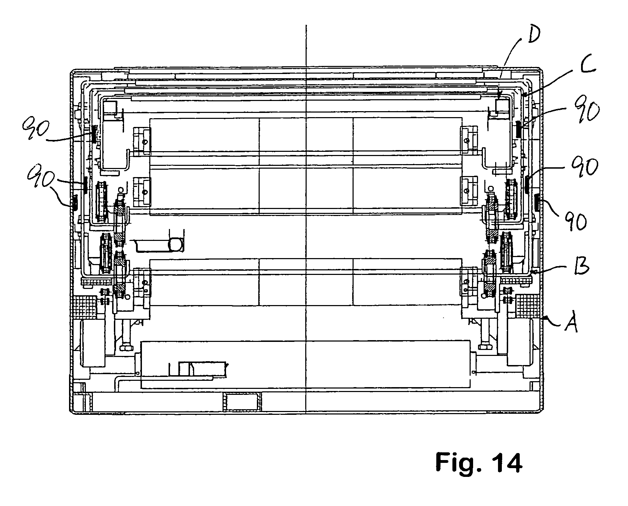

Fig. 14 shows that the various sprockets wheels 70 must be offset laterally to achieve the orientation of the chains shown in Figs. 12 and 13.

The above-described arrangement of the drive chains in this embodiment results in the fact that there is an absence of any chain runs (top or bottom) passing through the plane defined by the bottom of sections B, C or D, or at least the parts thereof exposed during telescopic movement. As a result, the undersides of these sections or at least the parts of the undersides being exposed during the telescopic movement may be provided with closed coverings preventing any possible penetration into the underside of the sections and thus preventing accidents with the results of damaging hands, fingers or other body parts, which could otherwise be damaged or injured by engaging said undersides during said telescopic movement.

The advantage is provided by the fact that the anchor points 82 and 88 for drive chains 64 and 68 are positioned at the rearmost walls of section A and B and are disposed at a suitable height to allow their bottom runs to be let through opening in the rear of sections B and C and stay above the undersides thereof. Further, the sprocket wheels 70 being mounted at the rearmost walls of sections B and C and at the bottom thereof makes is possible that also the drive chains 62 and 66 may be let through openings in the rear walls of sections B and C, and then have a lower run below the underside of the respective sections, but only in an area that will not be exposed during the telescopic movements Accordingly, the undersides of these sections or at least the parts of the undersides being exposed during the telescopic movements may be provided with the closed coverings.

In Fig. 14 the aforementioned brake means between the respective telescopic conveyor sections A-D are designated 90 - preferably the braking means 90 are mounted on the outer of the conveyor sections - or in words the braking means 90 for braking the mutual telescopic movement between the basic conveyor section A and the intermediate conveyor section B are mounted on the outer basic conveyor section A.

Is should be mentioned that the main scope of the invention, namely to be able to work with a totally downwardly closed wall parts, or with several partial wall parts, in order to prevent penetration into the conveyor sections by hands, fingers or other body part, may also be used by telescopic belt conveyors comprising only a basic conveyor section and only one telescopic conveyor section, that is a telescopic belt conveyor without any intermediate telescopic conveyor section.

Finally, it should be mentioned, that a possible further embodiment for a telescopic belt conveyor according to the invention may be provided such, that the telescopic movement of the respective conveyor section is effected by means of a drive system comprising only drive chains led over sprocket wheels between the respective conveyor sections at one side of the belt conveyor.

## Claims

1. A telescopic belt conveyor comprising a basic conveyor section, a number of intermediate telescopic conveyor sections, and an outermost telescopic conveyor section, said conveyor sections are mutually connected by means of a number of elongate drive members in the form of chains which are lead over sprocket wheels for executing telescoping movement in and out of said telescopic conveyor sections by means of a common drive unit, and an endless conveyor belt constituting an active conveying track of said conveyor sections, which sections are drive-connected with a common drive system, and said telescopic belt conveyor comprises an electric control system, **characterized in, that** said electric control system comprises an integrated security system, and that there at outermost ends of said conveyor sections are provided anti-squeeze means with an electric switch being a part of said security system.

2. A telescopic belt conveyor according to claim 1, **characterized in, that** said anti-squeeze means comprises a pivotally wall or shield part cooperating with said electric switch belonging to said security system.

3. A telescopic belt conveyor according to claim 1, **characterized in, that** said anti-squeeze means at the outermost end of said basic conveyor section and said intermediate conveyor section are constituted of an upper pivotally arranged traverse plate part being adapted to swing inwards against the effect from one or more compression springs at a compression impact, said plate part interacts with said electrical switch belonging to said security system.

4. A telescopic belt conveyor according to claim 1, **characterized in, that** said anti-squeeze means at the outermost end of said outermost conveyor section are constituted of a traverse semi-circular shield part, which is adapted to be able to swing upward or inward by the effect from one or more compression springs by an upwardly or inwardly directed compression impact, said shield part interacts with said electrical switch belonging to said security system.

5. A telescopic belt conveyor according to claims 1 and 4, **characterized in, that** said semi-circular shield part is provided with semi-circular end walls and with a width which preferably is a little bit wider than that of an end part of said outermost conveyor section.

6. A telescopic belt conveyor according to claims 1 and 4, **characterized in, that** said shield part comprises a built-in control box, which is accessible for operation of the functions of the telescopic belt conveyor mainly from the front of said shield part.

7. A telescopic belt conveyor according to claims 1 and 4, **characterized in, that** said shield part in a forward curved surface being provided with slots forming a relatively open grid or netting, and that a light source is mounted inside said shield part.

8. A telescopic belt conveyor according to claim 1, **characterized in, that** said security system comprises electric brake means, which are adapted to engage between the respective conveyor sections, and which being controlled in a such manner, that said brake means is automatically engaged to brake any telescopic movement of the respective conveyor sections.

9. A telescopic belt conveyor according to claim 8, **characterized in, that** the brake means being adapted to engage whenever telescopic movement is stopped, whether by power failure, chains breaking, activation of the anti-squeeze means, or by the operator taking his finger off the motor control.

10. A telescopic belt conveyor according to claim 8, **characterized in, that** the brake means being adapted to be biased closed, and actuated to a release position ― perhaps electronically, so that power failure causes braking.
